# EUROPEAN PATENT SPECIFICATION

(11) **EP 0 452 088 B1**
(45) Date of publication and mention of the grant of the patent: **21.06.1995**
(21) Application number: 91303110.0
(22) Date of filing: 09.04.1991
(51) Int. Cl.: H01B 11/22

(54) **Composite electric & optical cable manufacture**
Herstellung eines elektrisch-optischen Kabels
Fabrication d'un câble composite électrique et optique

(30) Priority: 09.04.1990 GB 9008028
(43) Date of publication of application: 16.10.1991
(73) Proprietor: METAL MANUFACTURES LIMITED, Sydney, NSW 2000 (AU)
(72) Inventor: Hogg, Clive Laurence, Selby, Victoria 3159 (AU)
(74) Representative: Dlugosz, Anthony Charles

(56) References cited:
- EP-A- 0 279 006
- CH-A- 665 047
- DE-C- 3 826 323
- GB-A- 2 179 471

## Description

### COMPOSITE ELECTRIC AND OPTICAL CABLE MANUFACTURE

This invention relates to composite electric and optical cables of the kind comprising at least one insulated electric conductor and, loosely housed in at least one bore or other passage within and extending throughout the length of the cable, at least one optical fibre.

It is an object of the present invention to provide an improved method of manufacturing a composite electric and optical cable of the aforesaid kind, which method of manufacture is simple and substantially less expensive than methods of manufacture hitherto proposed and used.

CH-A-665,047 describes a cable that is manufactured by causing at least one insulated electric conductor and at least one flexible tube to travel in the directions of their lengths; stranding or otherwise assembling the insulated electric conductor or conductors and the flexible tube or tubes together to form a flexible cable core; and extruding or otherwise forming an outer protective sheath over the advancing cable core to form a flexible electric cable. After the cable has been installed it is possible to accommodate at least one length of flexible optical guide comprising at least one optical fibre throughout the length of the bore of the flexible tube or of at least one of the flexible tubes within the cable by introducing a leading end of the length of optical guide into the end of said bore at one end of the cable and by propelling the optical guide along said bore by fluid drag of a gaseous medium which will have no deleterious effect on the optical guide or on the cable and which is passed through said bore in the desired direction of advance at such a pressure that the length of optical guide is carried along said bore until the length of optical guide is loosely housed in and throughout the length of said bore of said flexible tube of the cable.

The present invention is characterised in that, during manufacture, the flexible electric cable is wound around the hub of a cable drum in such a way that each end of the wound cable is exposed and accessible, and that the or each length of flexible optical guide is accommodated in the flexible tube while the flexible electric cable is wound on the cable drum.

Preferably, the length of optical guide loosely housed in the bore of the or each flexible tube along which the optical guide is propelled will substantially exceed the length of the bore so that there is an excess length of optical guide within the bore.

The leading end of the length of optical guide may be introduced into the end of the bore of said flexible tube at either exposed end of the wound cable but, preferably, it is introduced into the end of the bore of said flexible tube at the exposed leading end of the wound cable, that is to say the end of the wound cable nearer the hub of the cable drum and, for this purpose, preferably the leading end of the wound cable protrudes through a hole in a flange of the cable drum.

By virtue of the fact that both ends of the wound cable are exposed and accessible, after a flexible optical guide has been accommodated in the bore of the or a flexible tube of the wound cable, the flexible optical guide can be readily tested.

The or each flexible optical guide may be propelled along the bore of the or a flexible tube of the wound cable by fluid drag of the gaseous medium using the method and apparatus as described in British Patent Specification No: 2179471B of BICC plc but it is to be clearly understood that any suitable method hitherto proposed and used of propelling a flexible optical guide along a bore or other passage by fluid drag of a gaseous medium can be employed.

The or each flexible optical guide may be a separate optical fibre or it may be an optical fibre element comprising two or more optical fibres assembled together, such as, for example, a flexible plastics pipe having two or more optical fibres loosely housed in the bore of the pipe or, for example, an optical fibre ribbon comprising a plurality of optical fibres extending side by side with their axes lying in a substantially common plane. One optical fibre ribbon structure which is especially suitable for use in the improved method of the present invention is described and claimed in the specification of British Patent No: 2141558B of BICC plc.

The or each insulated electric conductor of the composite electric and optical cable may be an insulated conductor of an electric power cable or of an electric wiring cable or it may be an insulated electric conductor of an electric pilot or communications cable.

The invention also includes a composite electric and optical cable when manufactured by the improved method hereinbefore described.

The invention is further illustrated by a description, by way of example, by the preferred method of manufacturing a composite electric and optical cable of the aforesaid kind with reference to the accompanying drawings, in which:-
Figure 1 is a diagrammatic transverse cross-sectional view of the composite electric and optical cable to be manufactured by said preferred method;
Figure 2 is a diagrammatic sectional side view of preferred apparatus used for introducing a flexible optical guide into the bore of a flexible tube comprising a component part of the wound electric cable, and
Figure 3 is a diagrammatic pictorial view of the apparatus employed in effecting the final step in said preferred method.

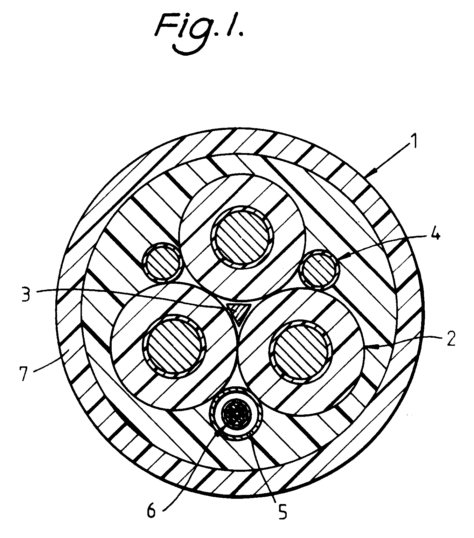

Referring to Figure 1, the composite electric and optical cable 1 to be manufactured by the preferred method of the invention comprises three insulated power conductors 2 helically wound around a central elongate former 3. Disposed in two of the interstices between adjacent insulated power conductors 2 are insulated earth conductors 4 and disposed in the other interstices between adjacent insulated power conductors is a flexible plastics tube 5 in the bore of which is loosely housed a flexible optical guide 6. The assembly is enclosed in an overall protective plastics sheath 7.

The flexible optical guide 6 may be of any one of a number of forms including a separate optical fibre and an optical fibre element comprising two or more optical fibres, e.g. an optical fibre ribbon.

In the preferred method of manufacturing the composite electric and optical cable 1 shown in Figure 1, the steps in the manufacture of the electric cable that are effected prior to introduction of the flexible optical guide 6 comprise stranding or otherwise assembling the insulated electric conductors 2 around an advancing elongate former 3 and laying in the helically extending interstices between the insulated conductors two insulated earth conductors 4 and a flexible plastics tube 5 to form a flexible cable core and extruding an outer protective sheath 7 of plastics material over the advancing cable core to form a flexible electric cable.

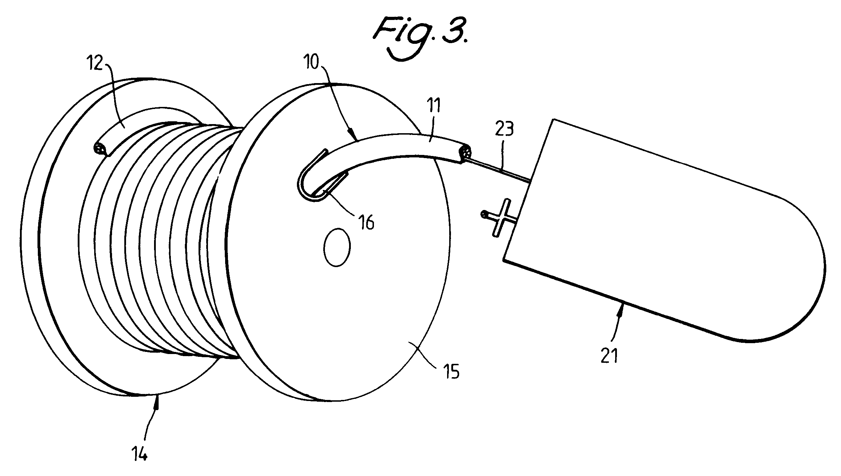

Downstream of the extrusion apparatus, the leading end 11 of the flexible electric cable 10 so formed is threaded through a hole 16 in a flange 15 of a cable drum 14 (Figure 3) so that it is exposed and accessible and the flexible electric cable is wound around the hub of the drum leaving the trailing end 12 of the wound cable exposed and accessible.

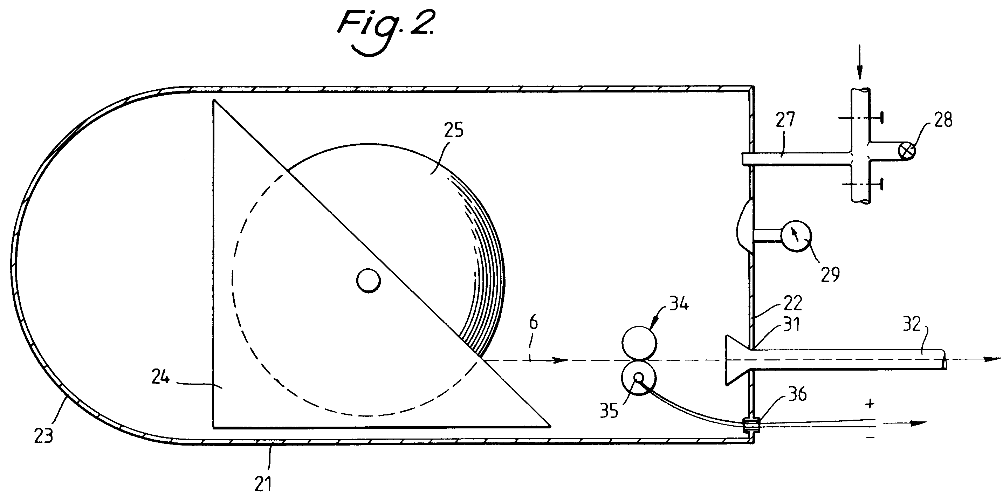

Referring to Figures 2 and 3, the preferred apparatus for introducing a flexible optical guide into the bore of the flexible plastics tube 5 of the wound electric cable 10 comprises a substantially fluid-tight housing 21 of elongate shape having, at one end of the housing, an end wall 22 and, at the other end of the housing, an end wall 23 of hemi-spherical shape. Mounted in the housing 21 is a play-off stand 24 on which is freely pivotally mounted a reel 25 on which is wound a flexible optical guide 6.

In the end wall 22 of the housing 21 is an inlet port 27 through which pressurised air from a source (not shown) can be introduced into the housing, the rate of introduction of the air being controllable by a valve 28. A visual indication of the pressure of the air within the housing 21 is given by a pressure metre 29.

Connected to an outlet 31 in the end wall 22 of the housing 21 is a pipe 32 of transparent plastics material for connection to the bore of the flexible plastics tube 5 of the wound electric cable 10 at its leading end 11.

Positioned within the housing 21 between the reel 25 and the outlet 31 is a pair of rubber-coated pinch wheels 34, one of which is rotatably driven through a gearbox (not shown) by a 12 v.d.c. motor 35, the leads from the motor passing through a fluid-tight seal in an aperture 36 in the end wall 22 via an electro-mechanical relay (not shown), controlled by a programmable controller to a power supply (not shown).

The housing 21 may have at least one window in its wall and may incorporate a main lighting system to enable the behaviour of the flexible optical guide 6 and the reel 25 to be continuously monitoried, thereby giving an indication of any obstruction in the bore of the plastics tube 5 within the wound electric cable 10.

In employing the apparatus shown in Figure 2 to introduce the flexible optical guide 6 of the reel 25 into the bore of the plastics tube 5 within the flexible electric cable 10 wound on the hub of the cable drum 14, the flexible optical guide is passed from the reel through a guide tube (not shown) between and in contact with the pair of wheels 34, through another guide tube (not shown) and through the pipe 32. A flexible lightweight body (not shown) similar in shape to a parachute or umbrella and having a transverse cross-sectional area substantially greater than that of the optical guide 6 may be attached to the leading end of the optical guide and be introduced into the bore of the plastics tube 5 of the wound cable 10 at its leading end 11. The pipe 32 is then connected to the bore of the plastics tube 5 of the flexible cable 10 at its leading end 11 to effect a fluid-tight seal.

Air under pressure is then introduced into the housing 21 through the inlet port 27 so that the housing is substantially filled with air at a predetermined pressure, the hemi-spherical end wall 23 of the housing being so shaped as to deflect the air smoothly so that it flows towards and out of the outlet 31 through the pipe 32 and into the bore of the plastics tube 5 of the wound cable 10. As the pressure of the air within the housing 21 approaches the required level, the pair of wheels 34 is rotatably driven by the motor 35 at continuously varying speeds between upper and lower limits to produce a pulsing effect serving to provide an intermediate release of flexible optical guide 6 from the reel 25.

The rate at which the flexible optical guide 6 is unwound intermittently from the reel 25 by the pair of wheels 34 and the pressure and rate at which air is continuously introduced into the fluid-tight housing 21 are such that regular pulsed progression of the flexible optical guide along the pipe 32 and into the bore of the plastics tube 5 of the wound cable 10 is produced by combination of the continuous varied drive and fluid drag of the air; where a flexible lightweight body is provided at the leading end of the flexible optical guide 6, the injected air will bear against the flexible lightweight body which assists in effecting advance of the flexible optical guide along the bore of the plastics tube. The process is continued until the desired length of flexible optical guide 6 is loosely housed in and throughout the length of the bore of the plastics tube 5 of the wound cable 10.

The improved method of the invention has the very important advantage that the cost of manufacture of the composite electric and optical cable is substantially reduced because the or each flexible optical guide is not accommodated in the cable during assembly of components of the cable. Thus, conventional and long proved successful methods of manufacturing the electric cable can be used. Furthermore, a flexible optical guide of any desired form can subsequently be accommodated in the bore of the or a flexible tube of the wound cable at any time as and when a particular composite electric and optical cable is required by a customer. Thus, a manufacturer need only keep in store standard forms of an electric cable incorporating at least one flexible tube.

A composite electric and optical cable manufactured by the improved method of the invention has two important advantages not provided by a composite electric and optical cable in which the or a flexible optical guide is not loosely housed in a bore or other passage within and extending throughout the length of the cable. First, in the event of a fault being detected in the or a flexible optical guide of the composite cable either when the composite cable is still wound on a cable drum or after the composite cable has been installed, the faulty flexible optical guide can be readily removed from the bore in which it is loosely housed using the technique of fluid drag of a gaseous medium and replaced by a sound flexible optical guide using the same technique. Secondly, if after the composite cable has been installed and a fault is detected in the or an insulated conductor of the cable and/or in the or a flexible optical guide of the cable intermediate of the ends of the cable, the composite cable can be cut in the region of the fault and the faulty insulated conductor and/or faulty flexible optical guide readily repaired. The faulty insulated conductor can be repaired using any known satisfactory technique; the faulty flexible optical guide can be repaired by cutting out the faulty part of the flexible optical guide, fusion splicing the or each cut length of optical fibre of the flexible optical guide and then repairing the tube in which the flexible optical guide is loosely housed in such a way that the bore of the tube is still substantially smoothly continuous. Subsequent repair of the cable sheath and other protective covering layer or layers will follow conventional practice.

## Claims

1. A method of manufacturing a composite electric and optical cable comprising at least one insulated electric conductor and, loosely housed in at least one bore or other passage within and extending throughout the length of the cable, at least one optical fibre, which method comprises causing at least one insulated electric conductor (2) and at least one flexible tube (5) to travel in the directions of their lengths; stranding or otherwise assembling the insulated electric conductor or conductors and the flexible tube or tubes together with a helical lay to form a flexible cable core; extruding or otherwise forming an outer protection sheath (1) over the advancing cable core to form a flexible electric cable (10); and accommodating at least one length of flexible optical guide (6) comprising at least one optical fibre throughout the length of the bore of the flexible tube (5) or of at least one of the flexible tubes within the cable by introducing a leading end of the length of optical guide (6) into the end of said bore at one exposed end of the cable and by propelling the optical guide (6) along said bore by fluid drag of a gaseous medium which will have no deleterious effect on the optical guide (6) or on the cable and which is passed through said bore in the desired direction of advance at such a pressure that the length of optical guide (6) is carried along said bore until the length of optical guide (6) is loosely housed in and throughout the length of said bore of said flexible tube (5) of the cable, characterised in that the flexible electric cable is wound around the hub of a cable drum (14) in such a way that each end of the wound cable is exposed and accessible, and that the or each length of flexible optical guide (6) is accommodated in the flexible tube (5) while the flexible electric cable (10) is wound on the cable drum.

2. A method as claimed in Claim 1, wherein the length of optical guide (6) loosely housed in and throughout the length of the bore of the or each flexible tube (5) along which the optical guide (6) is propelled will substantially exceed the length of the bore so that there is an excess length of optical guide (6) within a bore.

3. A method as claimed in Claim 1 or 2, wherein the leading end of the length of optical guide (6) is introduced into the end of the bore of said flexible tube (5) at the exposed leading end (11) of the wound cable (10).

4. A method as claimed in Claim 3, wherein the leading end (11) of the wound cable (10) protrudes through a hole in a flange (15) of the cable drum (14).

5. A method as claimed in any one of the preceding claims, wherein the or each flexible optical guide (6) is a separate optical fibre.

6. A method as claimed in any one of Claims 1 to 4, wherein the or each flexible optical guide (6) comprises an optical fibre element comprising two or more optical fibres assembled together.

7. A method as claimed in Claim 6, wherein the or each optical fibre element is an optical fibre ribbon comprising a plurality of optical fibres extending side-by-side with their axes lying in a substantially common plane.

8. A method as claimed in any one of the preceding Claims, wherein the or each insulated electric conductor of the composite electric and optical cable is an insulated conductor of an electric power cable or of an electric wiring cable.

9. A method as claimed in any one of Claims 1 to 7, wherein the or each insulated electric conductor of the composite electric and optical cable is an insulated conductor of an electric pilot cable or of an electric communications cable.

## Patentansprüche

1. Verfahren zum Herstellen eines elektrisch-optischen Verbundkabels mit mindestens einem isolierten elektrischen Leiter und mindestens einer Lichtleitfaser, die in mindestens einer Öffnung oder einem anderen Kanal in der Länge des Kabels locker aufgenommen ist und sich über die gesamte Länge des Kabels erstreckt, wobei das Verfahren die Schritte aufweist: Veranlassen, daß mindestens ein isolierter elektrischer Leiter (2) und mindestens ein flexibles Rohr (5) in ihre Längsrichtungen bewegt werden; spiralförmiges Verseilen oder andersartiges Zusammensetzen des isolierten elektrischen Leiters oder der isolierten elektrischen Leiter und des flexiblen Rohrs bzw. der flexiblen Rohre miteinander, um eine flexible Kabelader zu bilden; Extrudieren oder andersartiges Ausbilden einer Außenschutzumhüllung (1) über die fortschreitende Kabelader, um ein flexibles elektrisches Kabel (10) zu bilden; und Anordnen mindestens einer Länge eines flexiblen Lichtleiters (6) mit mindestens einer Lichtleitfaser über die gesamte Länge der Öffnung des flexiblen Rohrs (5) oder mindestens eines der flexiblen Rohre im Kabel durch Einführen eines vorderen Endes der Länge des Lichtleiters (6) an einem freiliegenden Ende des Kabels in das Ende der Öffnung und durch Vorwärtstreiben des Lichtleiters (6) durch den Fluidströmungswiderstand eines gasförmigen Mediums entlang der Öffnung, wobei das gasförmige Medium keine schädlichen Wirkungen auf den Lichtleiter (6) oder auf das Kabel hat, und mit einem solchen Druck in der gewünschten Vorschubrichtung durch die Öffnung geleitet wird, daß die Länge des Lichtleiters (6) entlang der Öffnung gedrückt wird, bis die Länge des Lichtleiters (6) in der Öffnung und über die gesamte Länge der Öffnung des flexiblen Rohrs des Kabels locker aufgenommen wird,
**dadurch gekennzeichnet, daß**
das flexible elektrische Kabel derart um die Achse einer Kabeltrommel (14) gewickelt ist, daß jedes Ende des aufgewickelten Kabels freiliegt und zugänglich ist, und daß die oder jede Länge des flexiblen Lichtleiters (6) im flexiblen Rohr (5) aufgenommen wird, während das flexible elektrische Kabel (10) auf der Kabeltrommel aufgewickelt ist.

2. Verfahren nach Anspruch 1, wobei die Länge des Lichtleiters (6), der in und über die gesamte Länge der Öffnung des oder jedes flexiblen Rohrs (5) locker aufgenommen ist, entlang dem der Lichtleiter (6) vorwärtsgetrieben wird, wesentlich größer ist als die Länge der Öffnung, so daß eine überschüssige Länge des Lichtleiters in einer Öffnung vorhanden ist.

3. Verfahren nach Anspruch 1 oder 2, wobei das vordere Ende der Länge des Lichtleiters (6) am freiliegenden vorderen Ende (11) des aufgewickelten Kabels (10) in das Ende der Öffnung des flexiblen Rohrs (5) eingeführt wird.

4. Verfahren nach Anspruch 3, wobei das vordere Ende (11) des aufgewickelten Kabels (10) sich durch eine Öffnung in einem Flansch (15) der Kabeltrommel (14) erstreckt.

5. Verfahren nach einem der vorhergehenden Ansprüche, wobei der oder jeder flexible Lichtleiter (6) eine separate Lichtleitfaser ist.

6. Verfahren nach einem der Ansprüche 1 bis 4, wobei der oder jeder flexible Lichtleiter (6) ein Lichtleitfaserelement mit zwei oder mehr zusammengesetzten Lichtleitfasern aufweist.

7. Verfahren nach Anspruch 6, wobei das oder jedes Lichtleitfaserelement ein Lichtleitfaserband mit mehreren Lichtleitfasern ist, die sich nebeneinander erstrecken, wobei ihre Achsen im wesentlichen in einer gemeinsamen Ebene liegen.

8. Verfahren nach einem der vorangehenden Ansprüche, wobei der oder jeder isolierte elektrische Leiter des elektrisch-optischen Verbundkabels ein isolierter Leiter eines Starkstromkabels oder eines Kabels einer elektrischen Verdrahtung ist.

9. Verfahren nach einem der Ansprüche 1 bis 7, wobei der oder jeder isolierte elektrische Leiter des elektrischoptischen Verbundkabels ein isolierter Leiter eines elektrischen Steuerkabels oder eines elektrischen Kommunikationskabels ist.

## Revendications

1. Procédé de fabrication d'un câble électrique et optique composite comprenant au moins un conducteur électrique isolé et, logée avec du jeu dans au moins un conduit central ou autre passage à l'intérieur du câble et s'étendant sur toute la longueur de celui-ci, au moins une fibre optique, ce procédé consistant : à faire en sorte qu'au moins un conducteur électrique isolé (2) et au moins un tube flexible (5) se déplacent dans leur direction longitudinale ; à torsader ou assembler ensemble de toute autre manière le conducteur ou les conducteurs électrique(s) isolé(s) et le tube ou les tubes flexible(s) suivant un pas hélicoïdal de manière à former une âme de câble flexible ; à extruder ou former de toute autre manière une gaine de protection extérieure (1) sur l'âme de câble en cours d'avance de manière à former un câble électrique flexible (10) ; et à loger au moins un tronçon d'un guide optique flexible (6) comprenant au moins une fibre optique sur toute la longueur du conduit central du tube flexible (5) ou d'au moins un des tubes flexibles à l'intérieur du câble en introduisant l'extrémité avant du tronçon du guide optique (6) dans l'extrémité dudit conduit central, à une des extrémités découvertes du câble, et en propulsant le guide optique (6) le long dudit conduit central par un effet de traînée de fluide d'un agent gazeux qui n'a aucun effet nuisible sur le guide optique (6) ou sur le câble et que l'on fait passer dans ledit conduit central, dans la direction désirée d'avance, à une pression telle que le tronçon du guide optique (6) se trouve transporté le long dudit conduit central jusqu'à ce que le tronçon du guide optique (6) soit logé de façon lâche dans ledit conduit central dudit tube flexible (5) du câble et sur toute la longueur de ce conduit, **caractérisé** en ce que l'on enroule le câble électrique flexible autour du noyau d'un touret (14) pour câble de manière telle que chaque extrémité du câble enroulé soit découverte et accessible et que l'on loge un tronçon de guide optique flexible (6) ou chaque tronçon de guide optique flexible (6) dans le tube flexible (5) pendant que l'on enroule le câble électrique flexible (10) sur le touret pour câble.

2. Procédé selon la revendication 1, dans lequel le tronçon de guide optique (6) logé de façon lâche dans le conduit central du tube flexible (5) ou de chaque tube flexible (5) et sur toute la longueur de ce conduit le long duquel le guide optique (6) est propulsé dépasse substantiellement la longueur du conduit central, de sorte qu'il existe un excédent de longueur de guide optique (6) à l'intérieur du conduit central.

3. Procédé selon la revendication 1 ou 2, dans lequel on introduit l'extrémité avant du tronçon de guide optique (6) dans l'extrémité du conduit central dudit tube flexible (5) à l'extrémité avant découverte (11) du câble enroulé (10).

4. Procédé selon la revendication 3, dans lequel l'extrémité avant (11) du câble enroulé (10) fait saillie à travers un trou formé dans une joue (15) du touret (14) pour câble.

5. Procédé selon l'une quelconque des revendications précédentes, dans lequel le guide optique flexible (6) ou chaque guide optique flexible (6) est une fibre optique séparée.

6. Procédé selon l'une quelconque des revendications 1 à 4, dans lequel le guide optique flexible (6) ou chaque guide optique flexible (6) comprend un élément formant fibre optique et comprenant deux ou plus de deux fibres optiques assemblées mutuellement.

7. Procédé selon la revendication 6, dans lequel l'élément formant fibre optique ou chaque élément formant fibre optique est un ruban en fibres optiques comprenant une pluralité de fibres optiques s'étendant côte à côte avec leurs axes disposés dans un plan sensiblement commun.

8. Procédé selon l'une quelconque des revendications précédentes, dans lequel le conducteur électrique isolé ou chaque conducteur électrique isolé du câble électrique et optique composite est un conducteur isolé d'un câble de transport d'énergie électrique ou d'un câble pour câblage électrique.

9. Procédé selon l'une quelconque des revendications 1 à 7, dans lequel le conducteur électrique isolé ou chaque conducteur électrique isolé du câble électrique et optique composite est un conducteur isolé d'un câble pilote électrique ou d'un câble de communications électriques.
